# EUROPÄISCHE PATENTANMELDUNG

(11) **EP 0 848 365 A1**
(43) Veröffentlichungstag der Anmeldung: **17.06.1998**
(21) Anmeldenummer: 97117486.7
(22) Anmeldetag: 09.10.1997
(51) Int. Cl.: G09B 9/00

(54) **Sandkasten-Anordnung**

(30) Priorität: 10.12.1996 DE 19651361
(71) Anmelder: Hagenlocher, Bernd, D-75446 Wiernsheim (DE)
(72) Erfinder: Hagenlocher, Bernd, D-75446 Wiernsheim (DE)
(74) Vertreter: Puschmann, Heinz H.

(57) **Zusammenfassung**

Sandkasten-Anordnung (10) für Unterrichts- und Schulungszwecke mit einem entsprechend einem darzustellenden Gelände zu verformenden Sandvolumen (SU), einer steuerbaren LCD-Einheit als Bildquelle (50), einen Bildwurf-Projektor (Overhead-Projector) (40), einem Umlenkspiegel (30) zur Ausleuchtung der Oberfläche des Sandvolumens und einem PC-Computer (60), der über auswechselbare Programmträger (65) der Steuerung der LCD-Einheit dient, wobei über mindestens ein Bedienfeld (80) darzustellende Daten von Hand eingebbar sind; vgl.

## Beschreibung

Die Erfindung betrifft eine Sandkasten-Anordnung für den taktischen Unterricht, zur Einsatzvorbereitung im militärischen Bereich und Katastrophenschutz, zur Planung und ähnlichen Schulungsmaßnahmen.

Bei einer bekannten Sandkasten-Anordnung dieser Art weist der von einem Untersatz getragene, im wesentlichen aus gleichen Bauteilen zusammengefügte Sandkasten oberhalb des Sandkastens eine von einem Galgen getragene Projektionseinrichtung in Form eines Projektors auf, über dessen punktförmige Lichtquelle mittels einer Prozeßsteuerung Koordinaten, Höhenlinien und ähnliche Werte auf die Sandoberfläche des ein gemäß einer darzustellenden Geländeformation zu verformenden Sandvolumen aufweisenden Sandkasten projeziert werden, wobei die Steuerung so erfolgt, daß der Lichtstrahl genau den Schnittpunkt der über ein Bedienfeld eingegebenen Kordinaten auf der Sandoberfläche beleuchtet; vgl. EP 0 413 945 A2.

Obwohl dort über vorhandene Folien unterschiedliche Ausbildungssituationen für die Ausbildung von Personen am Sandkasten auf dessen Oberfläche projizierbar sind, genügt die stehbildhafte Darstellung der zu simulierenden Übungsvorgänge nicht allen Forderungen, insbesondere können Geländedarstellungen mit bewegten Bildern, wie z.B. von Fahrzeugkolonnen, von Wolken, Brandstellen, Veränderungen der Aktionslage und/oder des Geländes u.a. nicht dargestellt werden.

Es besteht daher Bedarf an der Weiterbildung solcher der Schulung dienender Sandkasten-Anordnungen, um deren Einsatzmöglichkeiten zu erweitern.

Der Erfindung liegt daher die Aufgabe zu grunde, die bekannte Sandkasten-Anordnung dahingehend weiterzubilden, daß auch bewegte Bilder aus verschiedenen abtastbaren Datenträgern auf einfache und manuell beeinflußbare Weise auf der Oberfläche eines gemäß einer Geländeformation ausgeformten Sandkastens projeziert werden können.

Ausgehend von einer Sandkasten-Anordnung der eingangs genannten Art ist diese Aufgabe gemäß der Erfindung dadurch gelöst, daß diese Anordnung mindestens ein gemäß einer darzustellenden Geländeformation verformbares Sandvolumen umfassender Sandkasten, ein die wirksame Sandkastenfläche optisch erfassender, oberhalb der Sand-kastenfläche befindlicher und zu dieser um einen Winkel geneigter stationärer Umlenkspiegel, ein dem Sandkasten zugeordneter Bildwurf-Projektor zur Projektion von Bilddarstellungen auf der als Projektionsfläche dienenden Oberfläche des Sandvolumens und eine dem Bildwurf-Projektor zugeordnete von einem Rechner gesteuerte LCD-Einheit zur optischen Darstellung von über den Rechner gelieferten Bilddarstellungen, Daten-Informationen und Zielpunkten, die über den Bildwurf-Projektor auf die Projektionsfläche des Sandkastens projizierbar sind, umfaßt, wobei über mindestens ein Bedienfeld die zu erzeugenden Bilddarstellungen, Daten-Informationen und Zielpunkte auch manuell eingebbar und von Datenträgern abgetastete Daten manuell beeinflußbar sind.

Weitere Merkmale der Erfindung ergeben sich aus den Unteransprüchen.

Durch die erfindungsgemäße Anordnung der Kombination eines Bildwurf-Projektors (Overhead-Projektor) und einer LCD-Einheit als elektronisch steuerbare Bildquelle für die Darstellung unbeweglicher und beweglicher Bilder wie z.B. Geländeformationen und von sich bewegender Fahrzeuge u.ä. und unter Verwendung eines PC-Computers als Rechner zur Ansteuerung der LCD-Einheit werden eine Reihe von Vorteilen erzielt. So können jedwede Bilddarstellungen von einem Gelände, eines Aktionsbereiches u.ä., von bewegten Bildern verkörperte Darstellungen sowie Bewegungsabläufe, z.B. von Fahrzeugen, Marschkolonnen u.ä. sowie von Symbolen jedweder Art über die LCD-Einheit dargestellt und über den Projektor in jedem gewünschten Maßstab auf einfache Weise als Projektionsbilder auf der Oberfläche des Sandvolumens dargestellt werden. Entsprechende Darstellungen erfolgen gleichzeitig auf dem zugeordneten Monitor.

Da die Projektionsoberfläche die modulierte Sandfläche des Sandkastens ist, erscheinen alle Bilddarstellungen drei-dimensional, was zu einer überzeugenden Darstellung führt.

Nunmehr kann durch einfachen Austausch der Programm-Software in Form von Disketten u. CD's die Sandkasten-Anordnung als Leitstand zur Planung und zur visuellen Demonstration für das Militär, für Planungen in der Industrie, in der Forst- und Landwirtschaft, für den Umweltschutz, für die Feuerwehrausbildung, die Einsatzschulung der Polizei, für technische Hilfswerke, für Rettungsdienste, für den Katastrophenschutz und ähnliches ohne Änderung der Hardware eingesetzt werden.

Ferner können über einen Cursor die Symbole oder Markierungen über den gesamten Bildbereich verschoben werden.

Die erfindungsgemäße Anwendung einer elektronisch steuerbaren LCD-Einheit, also einer Flüssigkristallanzeige als Bildanzeige ermöglicht umfangreiche Bilddarstellungen aus Datenträgern als Bildprojektion auf der wirksamen Oberfläche des Sandkastens und damit eine wirklichkeitsgetreue Schulung des auszubildenden Personals. Ein solcher Sandkasten ist also nunmehr ein computergestütztes vielseitig anwendbares Simulationsgerät.

Die Erfindung ist nachfolgend anhand einer in der Zeichnung mehr oder minder schematisch dargestellten Sandkasten-Anordnung beschrieben.

Es zeigen:
- Fig. 1: Eine perspektivische Gesamtdarstellung einer Sandkasten-Anordnung gemäß der Erfindung,
- Fig. 2: eine vereinfachte Seitenansicht der Sandkasten-Anordnung nach Fig. 1,
- Fig. 3: ein Blockschaltbild der Sandkasten-Anordnung gemäß Fig. 1,
- Fig. 4: eine Draufsicht auf die Sandkasten-Anordnung nach Fig. 1 ohne Sandvolumen,
- Fig. 5: ein bei der Sandkasten-Anordnung nach den Fig. 1 und 4 verwendetes Eckteil in Perspektivdarstellung,
- Fig. 6: ein Detail des Sandkastens gemäß Fig. 1 im Schnitt V-V in Fig. 4.

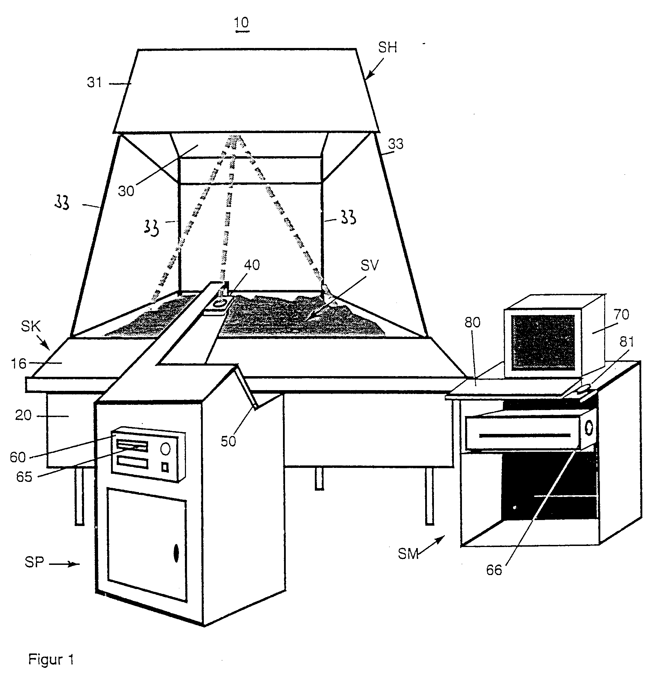

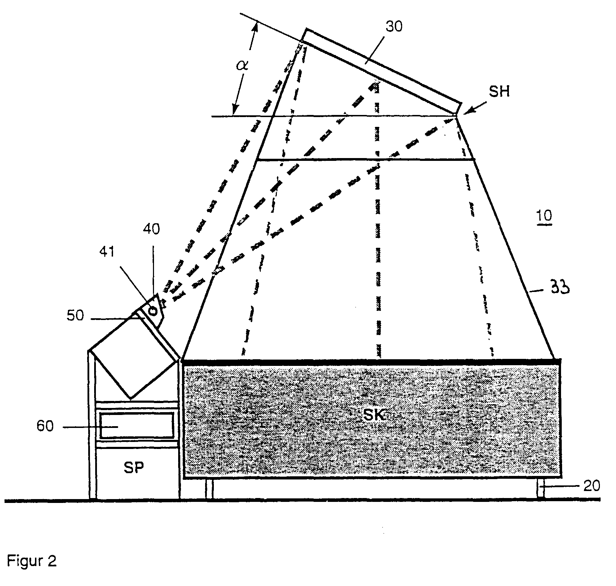

Wie die Fig. 1 und 2 im Prinzip zeigen, bilden ein Sandkasten SK, eine darauf angeordnete Spiegelhaube SH sowie zwei Schaltschränke PS und MS, von denen der erstere einen Bildwurf-Projektor (Overhead-Projektor) 40 mit einer Lichtquelle 41, eine LCD-Einheit 50 sowie einen Rechner 60 und der zweite einen Monitor 70 sowie ein Bedienfeld 80 umfaßt, die mit der Ziffer 10 insgesamt bezeichnete, im Einzelnen noch zu beschreibende, insbesondere dem taktischen Unterricht dienende Sandkasten-Anlage, die in Modul-Bauweise ausgeführt ist.

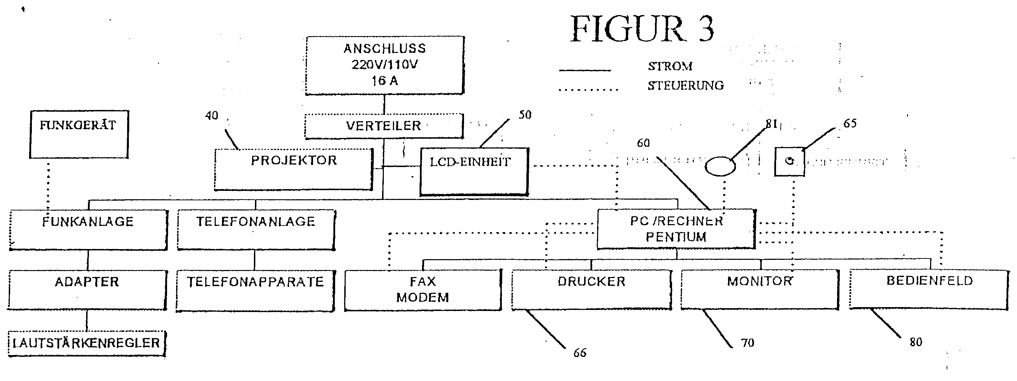

Die erforderliche Verschaltung dieser Module sowie die notwendigen steckbaren Verbindungsleitungen zwischen den Modulen sind der Einfachheithalber lediglich als die Struktur zeigendes Blockschaltbild in Fig. 3 dargestellt.

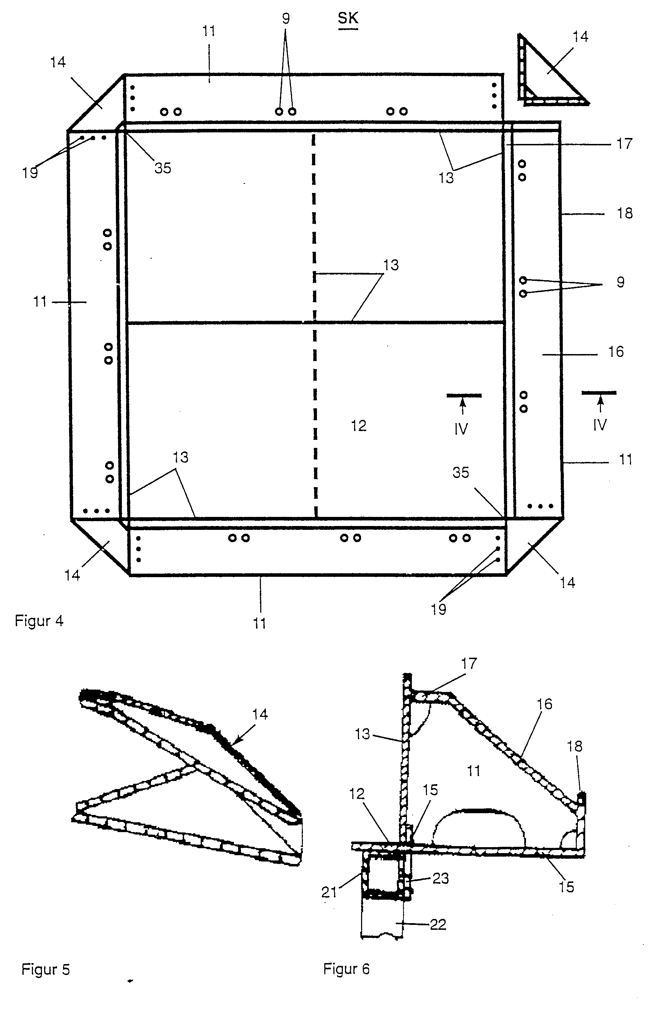

Der ein Sandvolumen SV aufweisende in der Draufsicht quadratische Sandkasten SK ist quaderförmig ausgebildet und besteht aus vier etwa gleichen Bauteilen 11, wie dies die Fig. 4 zeigt.

Jedes Bauteil 11 besteht aus einer Bodenplatte 12 mit einer Verlängerung 15, einer Bordwand 13, und mit einer Schrägfläche 16, die oben in einer Ablagefläche 17 übergeht und unten eine Anlagekante 18 aufweist. Jede Bodenplatte 12 hat eine Tiefe, die gleich dem halben Sandkasten Innenmaß ist. Wie die Zeichnung erkennen läßt, liegen die Bodenplatten 12 paarweise übereinander, so daß im montierten Zustand die jeweils gegenüberliegenden Bauteile 11 mit den Vorderkanten der Bodenplatten 12 bündig aneinanderstoßen. Entsprechendes gilt für die Bordwände 13 mit ihren Außenkanten, die jeweils eine Ecke bilden, in die ein Eckteil 14 einsetzbar ist. Die stoßbereiche 23 sind mit einer Dichtungsmasse, z.B. Silikon-Kautschuk abgedichtet. Die Bauteile 11 bestehen vorzugsweise aus Stahlblech; auch eine Ausführung aus armierten Kunststoff ist denkbar.

Wie insbesondere die Fig. 1 und 2 erkennen lassen, ruht der Sandkasten SK auf einem Untersatz 20 aus Profilstahlrohr. Er besteht aus einem Tragrahmen 21, der auf steckbaren Beinen 22 ruht. Die Außenmaße des Tragrahmens 21 entsprechen dem zu einem Viereck zusammengefügten Bauteil 11 von Bordwand- zu Bordwandaußenmaß. Im Eckbereich sind an den Tragrahmen 21 Laschen 23 lösbar befestigt, die in die Ausnehmungen 15 des aufgesetzten Sandkastens eingreifen. Dadurch ist eine formschlüssige Verbindung zwischen dem ein Außenmaß von etwa 2 x 2 m aufweisenden Sandkasten und dem Untersatz gegeben.

Die oben genannte Spiegelhaube SH besitzt zur Ausleuchtung der Oberfläche des Sandvolumens SV einen trapezförmigen Umlenkspiegel 30, der von einer das Tageslicht oder Umgebungslicht abschirmenden Haube 31 umgeben und von einem vierbeinigem Gestell 33 getragen ist, dessen vier Beine sich an den vier Ecken 35 des Sandkastens SK abstützen. Das Gestell bildet ein Trapezoid, dessen breite Basisseiten dem Sandkasten und dessen schmale Basisseiten dem Umlenkspiegel zugeordnet sind. Der Umlenkspiegel ist in hier nicht dargestellter Weise mit seinem Einstellwinkel α (vgl. Fig. 2) in Bezug auf die waagerechte Ebene des Sandkastens SK einstellbar im Gestell 33 gelagert.

Der in dem benachbart zum Sandkasten SK angeordneten Schaltschrank PS befindliche Bildwurf-Projektor 40 dient unter Mitwirkung des Umlenkspiegels 30 zum einen der Projektion von mittels der LCD-Einheit erzeugter Geländeaufnahmen, von Rasterbildern, von Gitternetzen und ähnlichen als stehende Bilder auf der Sandoberfläche, welchletztere auch zur Unterstützung einer zu modulierenden Geländenachbildung, z.B. anhand einer Kartenvorlage des im Sandkasten befindlichen Sandes SD dienen. Ferner können mittels der LCD-Einheit dargestellte Bewegungsabläufe von Fahrzeugen, Marschkolonnen u.ä. sowie Wolken, Brände, Veränderungen einer aktuellen Lage auf die Sandoberfläche projiziert werden. Schließlich können auch Luftbilder auf die Sandkastenoberfläche projiziert werden, z.B. zwecks Aktualisierung eines nachgebildeten oder simulierten Übungsfalles.

Häufig ist es wünschenswert, neben dem im Sandkasten modulierten aktuellen Zustand eines Geländes dessen früheres Aussehnen einzublenden. Für diesen Fall ist eine der Bordwände 13 eines der Bauteile 11 in nicht dargestellter Weise mit einer an sich bekannten aufrollbaren Projektionswand ausgestattet, die im Bedarfsfall durch Befestigung an der übrigen Bordwänden 13 über die Oberfläche des Sandkastens gespannt werden kann. Möglich ist aber auch eine für diesen Zweck präparierte Platte vorzusehen, die zwischen das Gestell 33 auf die aus Fig. 4 ersichtliche wirksame Oberfläche des Sandkastens gelegt werden kann.

Der Schaltschrank PS umfaßt ferner die bereits genannte mit 50 bezeichnete LCD-Einheit, die auf überraschend einfache Weise die verzerrungsfreie hoch auflösende farbige Darstellung stehender und/oder beweglicher Bilder und das Einblenden von optischen Zielmarkierungen ermöglicht. Die Informationen für diese Darstellungen werden von dem PC-Computer geliefert, der diese Informationen von einer Diskette 65, einer CD oder ähnl. abtastet und signalverarbeitet. Es sind daher Daten in jedweder Variation darstellbar, wobei diese Darstellungen von einem nicht näher dargestellten Objektiv des Bildwurf-Projektors über den Umlenkspiegel auf die Sandkasten-Oberfläche projiziert werden. Die durch gesteuerte Änderung des anliegenden magnetischen Feldes auf dem LCD entstehenden Bilder werden also über den Bildwurf-Projektor und über Umlenkspiegel 30 auf die Sandkasten-Oberfläche von etwa 2x2 m Größe projiziert. Da die wirksame Oberfläche des im Sandkasten befindlichen Sandes gemäß eines darzustellenden Geländes moduliert ist, erscheinen dem Betrachter diese Darstellungen drei-dimensional. Die LCD-Einheit kann also sowohl bewegte Bilder als auch eine bewegbare Markierung in Form eines Symbols liefern, die über den Umlenkspiegel 30 ebenfalls auf die Sandkasten-Oberfläche projiziert werden. Diese Markierungen können über einen Cursor 81 über den Rechner 60 und eine in diesen eingeführt ein spezielles Programm verkörpernde Programmsteuerung in allen Richtungen über die von der LCD-Einheit gelieferte Bilddarstellung und damit über die gesamte wirksame Oberfläche des Sandkastens verschwenkt werden. Auf diese Weise können auf einfachste Weise steuerbare optische Zielmarkierungen auf die Sandkasten-Oberfläche projeziert werden.

Die für eine Darstellung etwa erforderlichen Koordinaten sind entweder im Programm gespeichert oder werden über das Bedienfeld 80 eingegeben, das ebenso wie der Cursor 81 dem dem Sandkasten SK ebenfalls benachbarten Schaltschrank MS zugeordnet ist.

Der dem Schaltkasten MS ferner zugeordnete Monitor 70 zeigt die jeweils abgetasteten oder eingegebenen mittels LCD-Einheit dargestellten Werte an. Über das Bedienfeld 80 sind ferner Funktionen wie Ein- und Ausschalten, Leuchtstärkeregelung und ähnliche Parameter wie z.B. zu simulierender Funksprechverkehr bei der Ausbildung ebenfalls einstellbar.

Wie bereits erwähnt, ist die vollständige Verschaltung der vorstehend beschriebenen Baugruppen nicht näher dargestellt, ihr Zusammenwirken ist jedoch anhand des Blockschaltbildes gemäß der Fig. 3 erkennbar, auf dem die genannten Baugruppen als Kästchen deren Stromversorgung durch ausgezogene Linien und deren Steuerung durch gestrichelte Linien dargestellt sind.

Die einzelnen Kabelverbindungen zwischen den Schaltschränken PS, MS und dem Sandkasten SK sind ebenfalls der Übersichthalber nicht dargestellt; sie sind in an sich bekannter Weise mit den einzelnen Modulen durch an sich bekannte Steckverbindungen lösbar verbunden.

Aus Fig. 3 ist insbesondere ersichtlich, daß die LCD-Einheit 50 über den PC-Rechner 60 gesteuert wird, an den der Monitor 70, ein Drucker 66, ein nicht dargestelltes Fax-Gerät angeschlossen sind. Ferner sind dort die verschiedenen Anschlußgeräte, wie Funk- und Telefongeräte, Adapter, Lautstärkeregler u.ä. schematisch dargestellt, ebenso die als Datenträger dienende Diskette 65.

## Patentansprüche

1. Sandkasten-Anordnung für den taktischen Unterricht, zur Einsatzvorbereitung im militärischen Bereich und Katastrophenschutz, zur Planung und ähnlichen Schulungsmaßnahmen, mit mindestens einem ein gemäß einer darzustellenden Geländeformation verformbares Sandvolumen umfassenden Sandkasten (SK), einem die wirksame Sandkastenoberfläche optisch erfassende, oberhalb der Sandkastenfläche befindlichen und zu dieser um einen Winkel (α ) geneigten stationären Umlenkspiegel (30), einem dem Sandkasten (SK) zugeordneten Bildwurf-Projektor (40) zur Projektion von Bilddarstellungen auf der als Projektionsfläche dienenden Oberfläche des Sandvolumens im Sandkasten (SK), und mit einer dem Sandkasten (SK) zugeordneten, von einem Rechner (60) gesteuerten LCD-Einheit (50) zur optischen Verkörperung der von dem Rechner gelieferten Bilddarstellungen, Daten-Informationen und Zielpunkten, die über den Bildwurf-Projektor auf die Oberfläche des Sandvolumens projizierbar sind, wobei über mindestens ein Bedienfeld (80) die zu erzeugenden Bilddarstellungen, Daten-Informationen und Zielpunkte auch manuell eingebbar und von Datenträgern (65) abgetastete Daten manuell beinflußbar sind.

2. Sandkasten-Anordnung nach Anspruch 1, **gekennzeichnet** durch einen Monitor (70) zur gleichzeitigen gesonderten Darstellung der vom Rechner (60) gelieferten und/oder über das Bedienfeld (80) manuell eingegebener, von der LCD-Einheit (50) angezeigter Bilddarstellungen und Daten.

3. Sandkasten-Anordnung nach Anspruch 1, **dadurch gekennzeichnet**, daß dem Bedienfeld für das Einblenden von Symbolen in die von der LCD-Einheit (50) gelieferten Bilddarstellung ein Cursor (81) zugeordnet ist.

4. Sandkasten-Anordnung nach den Ansprüchen 1 bis 3, **dadurch gekennzeichnet**, daß Sandkasten (SK) mit Umlenkspiegel (30), Projektor (40), LCD-Einheit (50) und Rechner (60) sowie Bedienfeld (80) und Monitor (70) voneinander getrennte Baugruppen sind, die als unterschiedlich zueinander anzuordnende über lösbare Steckverbindungen miteinander elektrisch verbundene autonome Module ausgebildet sind.

5. Sandkasten-Anordnung nach den Ansprüchen 1 bis 4, **dadurch gekennzeichnet**, daß der Rechner (60) als PC-Computer ausgebildet ist.

6. Sandkasten-Anordnung nach den Ansprüchen 1 bis 5, **dadurch gekennzeichnet**, daß die Neigung (Winkel α ) des Umlenkspiegels (30) gegenüber der etwa waagerechten Oberfläche des Sandkastens (SK) einstellbar ausgebildet ist.
